# EUROPÄISCHE PATENTSCHRIFT

(11) **EP 2 648 287 B1**
(45) Veröffentlichungstag und Bekanntmachung des Hinweises auf die Patenterteilung: **18.06.2014**
(21) Anmeldenummer: 13000582.0
(22) Anmeldetag: 05.02.2013
(51) Int. Cl.: H01R 13/707

(54) **Fahrzeugseitige Dose eines Ladesteckverbinders, insbesondere für Flurförderfahrzeuge**
Vehicle-side socket for a charging plug connector, in particular for industrial trucks
Prise côté véhicule d'un connecteur de charge, en particulier pour chariots de manutention

(30) Priorität: 05.04.2012 DE 102012007047
(43) Veröffentlichungstag der Anmeldung: 09.10.2013
(73) Patentinhaber: Schaltbau GmbH, 81829 München (DE)
(72) Erfinder: Fraczek, Jerzy, 81827 München (DE)
(74) Vertreter: Grünecker, Kinkeldey, Stockmair & Schwanhäusser

(56) Entgegenhaltungen:
- EP-B1- 1 014 510
- DE-A1-102010 009 727
- DE-U1- 9 114 687

## Beschreibung

Die Erfindung betrifft eine fahrzeugseitige Dose eines Ladesteckverbinders, insbesondere für Flurförderfahrzeuge, mit einem ersten Hauptkontakt und einem zweiten Hauptkontakt, die mit einem Ladestecker verbindbar sind, sowie mit einem Hilfskontakt, der im Betriebszustand des Fahrzeuges, wenn der Ladestecker abgenommen ist, über eine Kontaktbrücke mit einem der Hauptkontakte elektrisch verbunden ist.

Solche fahrzeugseitigen Dosen, die zur Verbindung eines Fahrzeugakkumulators mit einer elektrischen Energiequelle dienen, sind aus dem Stand der Technik weitgehend bekannt. Um zu gewährleisten, dass der Ladestecker nach Beendigung des Ladevorgangs, insbesondere während des Betriebes des Fahrzeuges, von der Dose abgenommen ist, ist, nach Abnahme des Ladesteckers, ein, mit einer Kontrolleinheit verbundener Hilfskontakt über eine verstellbare Kontaktbrücke an zumindest einen der Hauptkontakte anzuschließen. Durch diese elektrische Verbindung des Hilfskontaktes mit einem der Hauptkontakte, wird ein bestimmter Signalstrom durch den Hilfskontakt abgegriffen und der Kontrolleinheit zugeführt, die dann wiederum, in Abhängigkeit dieses Signalstroms, den elektrischen Antrieb des Fahrzeuges regelt. Somit wird bei Vorhandensein eines bestimmten Signalstromwertes der Antrieb freigegeben und bei einem zu niedrigen Signalstromwert der Antrieb gesperrt. Durch diese Sicherheitsvorrichtung ist gewährleistet, dass kein Stecker, bei Betrieb des Fahrzeuges, an dem Fahrzeug angeklemmt ist. Schäden, sowohl des Fahrzeuges als auch der Ladegeräte, sowie der Gegenstände und Personen in der Umgebung können bei der Inbetriebnahme des Fahrzeuges somit vermieden werden.

Beispielsweise ist in der EP 1 014 510 B1 eine Ladevorrichtung offenbart, bei der ein dritter Hauptkontakt neben zwei ersten und zweiten Hauptkontakten angeordnet ist, welcher dritte Hauptkontakt mit einem separaten, auf die Hauptkontakte aufsteckbaren, deckelähnlichen Element übersteckt werden kann. Ein Nachteil dieser Ausführung ist jedoch darin zu sehen, dass dieses deckelähnliche Element als loses Teil ausgebildet ist. So ist dieses deckelähnliche Element, insbesondere während der Aufladungsdauer des Fahrzeugakkumulators, leicht zu verlieren. Ein solcher Verlust würde das Fahrzeug so lange fahruntauglich machen bis ein Ersatzdeckel zur Verfügung steht. Auch ist der Bediener in einem solchen Fall dazu verleitet, selbständig eine Überbrückung anzufertigen, was wiederum zu Beschädigungen an den verbauten Teilen sowie zu einer erhöhten Verletzungsgefahr führen kann.

Weiterer relevanter Stand der Technik ist aus DE 9114687 U1 und aus DE 102010009727 A1 bekannt.

Es ist daher die Aufgabe der vorliegenden Erfindung, eine fahrzeugseitige Dose eines Ladesteckverbinders zur Verfügung zu stellen, durch die die Gefahr eines Verlustes der zur Überbrückung vorgesehenen Kontaktbrücken minimiert wird und die Sicherheit während des Betriebs des Fahrzeuges erhöht wird.

Diese Aufgabe wird erfindungsgemäß dadurch gelöst, dass die Kontaktbrücke mit einem ersten Ende unverlierbar mit dem Hilfskontakt verbunden ist, und aus einer ersten Stellung, in der der eine Hauptkontakt zum Aufstecken des Ladesteckers freigegeben ist, in eine zweite Stellung überführbar ist, in der die Kontaktbrücke den Hilfskontakt mit dem einen Hauptkontakt verbindet.

Dies hat den Effekt, dass die Kontaktbrücke ortsfest mit dem Hilfskontakt der fahrzeugseitigen Dose verbunden ist. Dadurch ist die Kontaktbrücke dauerhaft, sowohl während der Aufladung des Fahrzeugakkumulators, als auch während der Betriebszeit des Fahrzeuges mit der Dose und damit dem Fahrzeug gekoppelt. Zum Anderen, durch die Verstellbarkeit dieser Kontaktbrücke zwischen deren beiden Stellungen, ist die Überbrückungsfunktion während des Betriebszustandes des Fahrzeuges auf unkomplizierte Weise einzustellen.

Weitere Merkmale sind in den Unteransprüchen enthalten, dessen Vorteile kurz nachfolgend erläutert werden.

Vorteilhafterweise geht das erste Ende der Kontaktbrücke in einen, mit dem Hilfskontakt verbundenen ersten Stiftkontakt über, und/oder ein zweites Ende der Kontaktbrücke, zur Kontaktierung des einen Hauptkontaktes in der zweiten Stellung, in einen zweiten Stiftkontakt über. Durch eine solche Ausgestaltung der Kontaktbrücke, wird die Kopplung mit dem Hilfskontakt sowie mit dem einen Hauptkontakt auf konstruktiv einfache Weise gelöst. Zudem sind die beiden, räumlich voneinander abgetrennten Kontaktbereiche klar den jeweiligen Kontakten zugeordnet.

Sind der erste und der zweite Hauptkontakt als zwei Kontaktbuchsen ausgestaltet, die bezüglich ihrer Längsachsen im Wesentlichen parallel zueinander angeordnet sind, und sind der erste Stiftkontakt und/oder der zweite Stiftkontakt zu diesen Kontaktbuchsen wiederum bezüglich ihrer Längsachse im Wesentlichen parallel angeordnet, so wird eine räumlich kompakte Konstruktion des erfindungsgegenständlichen Gegenstandes ermöglicht. Die Ausgestaltung der Hauptkontakte als Kontaktbuchsen bringt wiederum den Vorteil mit, dass die Kontaktflächen nach außen hin abgeschirmt sind und auf einfache Weise durch den zweiten Kontaktstift zugänglich sind.

Ist die Kontaktbrücke, zum Umschalten der Kontaktbrücke von der ersten in die zweite Stellung, axial, entlang der Längsachse des ersten Kontaktstiftes, von der ersten Stellung in eine erste Zwischenstellung verschiebbar, sowie in eine zweite Zwischenstellung verdrehbar, in der der zweite Stiftkontakt in den einen Hauptkontakt einsteckbar ist, wobei er von dieser zweiten Zwischenstellung axial in die zweite Stellung verschiebbar ist, so sind die erste und zweite Stellung, durch die zusätzlichen Bewegungen der Kontaktbrücke, deutlich voneinander abgegrenzt.

Von Vorteil ist es auch, wenn der mit dem Hilfskontakt verbundene, erste Kontaktstift in axialer Richtung in der ersten sowie der zweiten Stellung über eine Feder lagegesichert ist. So wird eine unbeabsichtigte Bewegung der Kontaktbrücke vermieden.

Weist die Kontaktbrücke zwischen dem ersten und dem zweiten Ende einen Kontaktsteg auf, welcher quer zu dem ersten und/ oder zweiten Stiftkontakt verläuft, so kann wiederum eine leichte Verbindung der beiden Enden erfolgen und der Bauraum weiterhin reduziert werden.

Ist die Kontaktbrücke um die Längsachse des ersten Kontaktstiftes drehbar gelagert, so wird das Umschalten der Kontaktbrücke von der ersten in die zweite Stellung weiter vereinfacht.

Die Erfindung wird nachfolgend anhand eines Ausführungsbeispieles mit Hilfe von Figuren in mehreren Zeichnungen näher erläutert.

Es zeigen:
- Fig. 1: eine isometrische Ansicht der erfindungsgemäßen fahrzeugseitigen Dose eines Ladesteckverbinders in einer ersten Stellung, in der die Hauptkontakte zum Aufstecken des Ladesteckers freigegeben sind.
- Fig. 2: zeigt die in Fig. 1 dargestellte fahrzeugseitige Dose in einer ersten Zwischenstellung, in der die Kontaktbrücke gegenüber der ersten Stellung axial verschoben ist.
- Fig. 3: veranschaulicht die zweite Zwischenstellung der fahrzeugseitigen Dose nach Fig. 1 gezeigt, in der die Kontaktbrücke, gegenüber der ersten Zwischenstellung zusätzlich verdreht ist.
- Fig. 4: zeigt die Kontaktbrücke der fahrzeugseitigen Dose der vorhergehenden Figuren in einer zweiten Stellung, in der der Ladestecker von den Hauptkontakten getrennt ist und der Betrieb des Fahrzeuges freigegeben ist.

Die Figuren sind lediglich schematischer Natur und dienen nur dem Verständnis der Erfindung. Die gleichen Elemente werden mit denselben Bezugszeichen versehen.

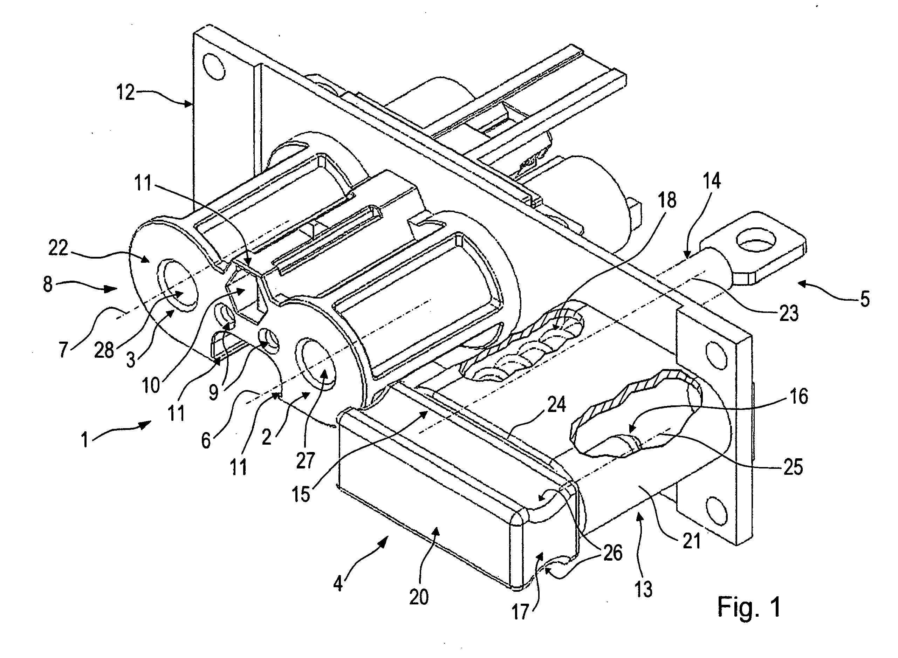

In Fig. 1 ist die fahrzeugseitige Dose 1 eines Ladesteckverbinders mit einem ersten Hauptkontakt 2 sowie einem zweiten Hauptkontakt 3 gemäß der Erfindung dargestellt, welche Hauptkontakte 2, 3 über eine Kontaktbrücke 4 mit einem Hilfskontakt 5 verbindbar sind.

Die beiden Hauptkontakte 2, 3 sind als Kontaktbuchsen ausgebildet, die bezüglich ihrer Längsachsen 6, 7 im Wesentlichen parallel zueinander angeordnet und im Inneren einer Steckeraufnahme 8 gehalten sind. Über Öffnungen in einer äußeren Stirnseite 22 der Steckeraufnahme 8 sind Innenflächen 27, 28 der Kontaktbuchsen der beiden Hauptkontakte 2, 3 für Gegenkontakte, wie den Polstiften eines Steckers zugänglich. Um den Akkumulator, bei angeschlossenem Stecker, mit elektrischer Energie aufzuladen, werden diese Innenflächen der Kontaktbuchsen der Hauptkontakte 2, 3 auf übliche Weise, flächig mit Außenflächen der zu kontaktierenden Stifte, bspw. des Steckers, in Verbindung gebracht.

In einem Zwischenraum zwischen der Kontaktbuchse des ersten Hauptkontaktes 2 und der Kontaktbuchse des zweiten Hauptkontaktes 3 sind weitere Kontaktbereiche anbringbar. So können zusätzlich Pilot-Kontaktaufnahmen 9, zur Aufnahme von einem oder mehreren Pilotkontaktstiften, eine Codierstiftaufnahme 10 zur Aufnahme eines Codierstiftes und/ oder Anschlüsse für eine Luft-/Flüssigkeitszufuhr vorgesehen sein. Weiterhin sind an der Steckeraufnahme 8 mehrere Führungsflanken 11 angeordnet, die zur Führung des Steckers beim Aufstecken auf die Steckeraufnahme 8 dienen. Die Konstruktion der Steckeraufnahme 8 entspricht hierbei vorzugsweise der Norm DIN 43589-1. Zur Befestigung an dem Fahrzeug, ist die Steckeraufnahme 8 an einer Grundplatte 12 fixiert, wobei die Grundplatte 12 Befestigungsbereiche zur Befestigung an dem Fahrzeug aufweist. Die Längsachsen 6, 7 der beiden Hauptkontakte 2, 3 verlaufen dabei quer, insbesondere senkrecht, zu der Plattenebene der Grundplatte 12.

Neben der, den ersten und zweiten Hauptkontakt 2, 3 aufnehmende Steckeraufnahme 8 ist eine Hilfskontaktaufnahme 13 angeordnet, die vorzugsweise getrennt von der Steckeraufnahme 8 ausgebildet und ebenfalls an der Grundplatte 12 befestigt ist. Diese Hilfskontaktaufnahme 13 dient zur Lagerung eines, mit dem Hilfskontakt 5 verbundenen, ersten Kontaktstiftes 14, der als Rundstab ausgebildet ist und ein erstes Ende 15 der Kontaktbrücke 4 bildet. Der erste Kontaktstift 14 ist dabei starr mit dem ersten Ende 15 verbunden. Der erste Kontaktstift 14 ist hierbei bezüglich seiner Längsachse 23 im Wesentlichen parallel zu den Längsachsen 6, 7 des ersten und zweiten Hauptkontaktes 2, 3 angeordnet. Neben der dargestellten Platzierung des ersten Kontaktstiftes 14 und somit der Hilfskontaktaufnahme 13 seitlich neben der Steckeraufnahme 8 und den Hauptkontakten 2, 3, ist es auch möglich diesen ersten Kontaktstift sowie die Hilfskontaktaufnahme 13 unterhalb oder oberhalb der Steckeraufnahme 8 zu platzieren. Die axiale Position des ersten Kontaktstiftes 14, also die Position in Richtung seiner Längsachse, ist durch ein als Spiralfeder ausgebildetes Federelement 18 gesichert.

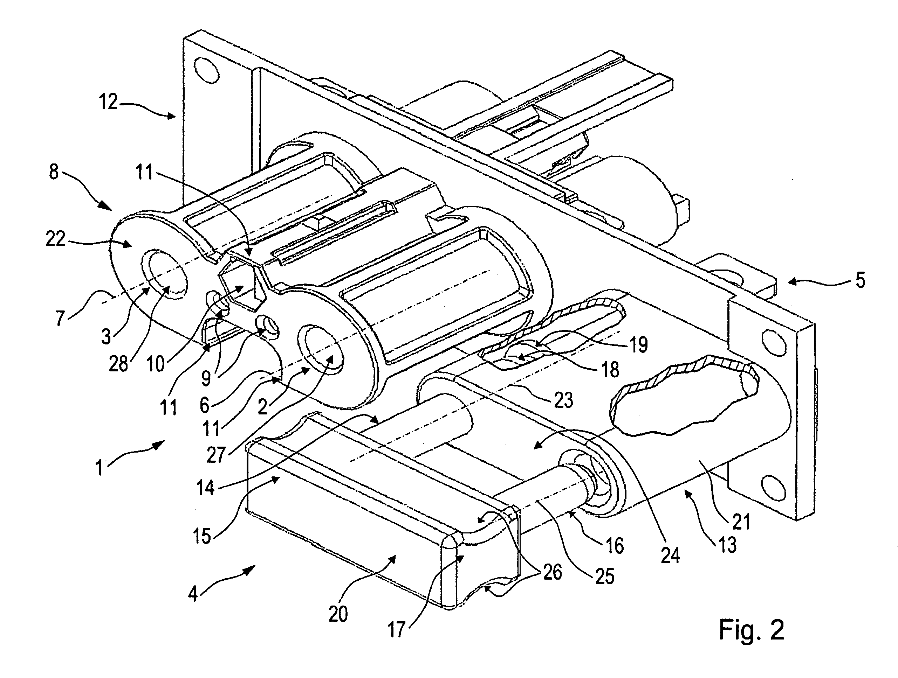

Wie aus Fig. 2 besonders gut zu erkennen ist, ist dieses Federelement 18 mit einem ersten Federende an einer Innenseite einer Stirnwand 24 der Hilfskontaktaufnahme 13 sowie mit einem, dem ersten Federende gegenüberliegenden zweiten Federende an einem, an dem ersten Kontaktstift 14 befestigten Abstützring 19 abgestützt. Durch die Federkraft der Feder 18 wird der erste Kontaktstift 14 des Hilfskontaktes 5 sowie die Kontaktbrücke 4 in der, in der Fig. 1 dargestellten ersten Stellung lagegesichert.

An einem, dem ersten Ende 15 gegenüberliegendem zweiten Ende 17 ist weiterhin ein zweiter, stabförmiger Kontaktstift 16 an der Kontaktbrücke 4 angeformt, der ebenfalls bezüglich seiner Längsachse 25 im Wesentlichen parallel zu den Längsachsen 6, 7 der ersten und zweiten Hauptkontakte 2, 3 und somit auch parallel zu der Längsachse 23 des ersten Kontaktstiftes 14 angeordnet ist. Die beiden Enden 15 und 17 der Kontaktbrücke 4 sind über einen, quer zu den Längsachsen 23, 25 des ersten und zweiten Kontaktstiftes 14, 16 verlaufenden Stegbereich 20 verbunden. Dieser Stegbereich 20 der Kontaktbrücke 4 weist an der Außenseite Griffflächen 26 zur leichteren Handhabung auf, die vorzugsweise mit einem elektrisch isolierenden Material ummantelt sind. Im Inneren ist hingegen ein Steg aus elektrisch leitfähigem Material vorgesehen, der die beiden Enden 16, 17 elektrisch miteinander koppelt.

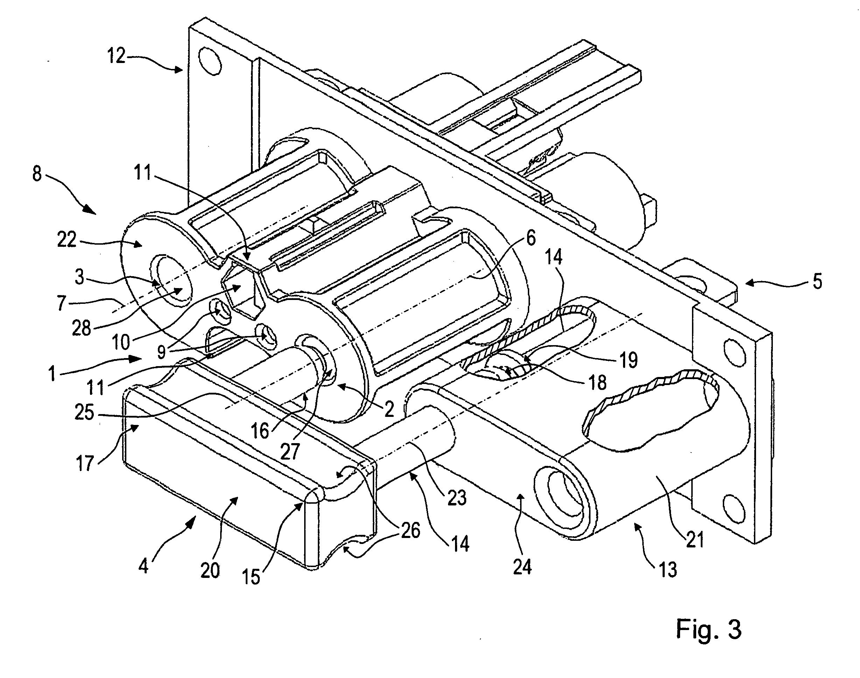

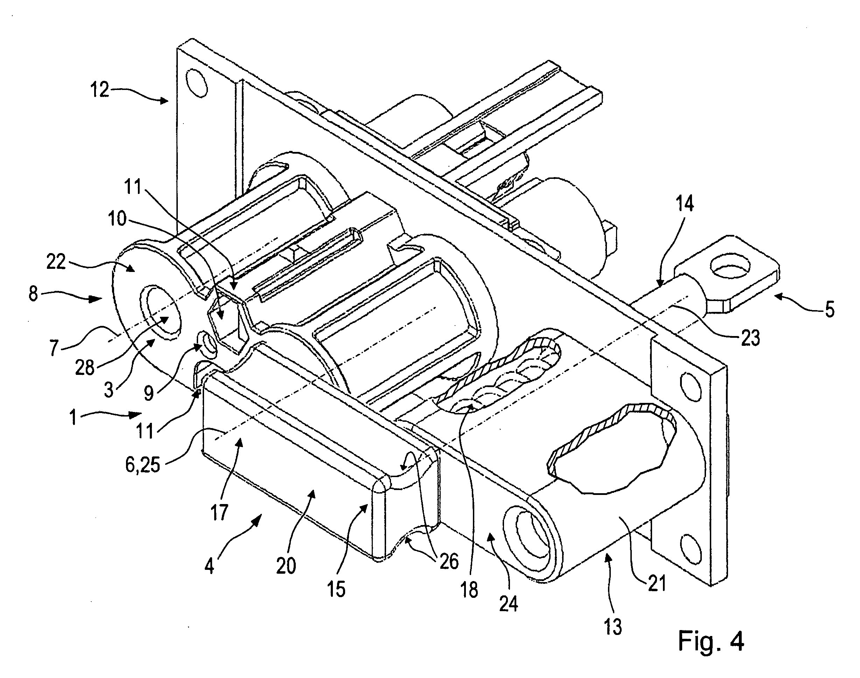

Ist nun, nach dem Aufladen des Fahrzeugakkumulators der erneute Betrieb des Fahrzeuges erwünscht, wird die Kontaktbrücke 4 von der, in Fig. 1 dargestellten, ersten Stellung in die, in Fig. 4 dargestellten, zweiten Stellung umgeschaltet. Hierzu wird die Kontaktbrücke 4 zunächst in axialer Richtung, entlang der Längsachse 23 des ersten Kontaktstiftes 14, entgegen der Federkraft, verschoben, bis der zweite Kontaktstift 16 vollständig aus der Hilfskontaktaufnahme 13 herausgezogen ist und somit mit seiner vorderen, freien Stirnfläche die Außenseite der Stirnwand 24 der Hilfskontaktaufnahme 13 nach außen hin überragt. In der somit erzielten, ersten Zwischenstellung (ersichtlich in Fig. 2) nimmt das Federelement 18 einen komprimierten Zustand ein. Anschließend wird die Kontaktbrücke 4 um die Längsachse 23 des ersten Kontaktstiftes 14 in eine zweite Zwischenstellung geschwenkt (ersichtlich in Fig. 3), bis die Längsachse des zweiten Kontaktstiftes 16 symmetrisch mit der Längsachse 6 des ersten Hauptkontaktes 2 ist.

Um nun die in Fig. 4 dargestellte zweite Stellung, die einen Betrieb des Fahrzeuges ermöglicht zu erreichen, wird die Kontaktbrücke axial, entlang der Längsachse 23 des ersten Kontaktstiftes 14, um den zweiten Kontaktstift 16 in die Kontaktbuchse des ersten Hauptkontaktes 3 einzustecken. Schließlich nimmt der Hilfskontakt 5 wieder die gleiche axiale Lage wie in der ersten Stellung ein, ist lediglich um den Verdrehwinkel, hier 180°, verdreht.

Die Außenseite der Stirnwand 24 der Hilfskontaktaufnahme 13 sowie die äußere Stirnseite 22 der Steckeraufnahme 8 weißen dabei ebenflächige Abschnitte auf, die in der ersten und/ oder zweiten Stellung der Kontaktbrücke 4 mit einer Anlagefläche am Stegbereich 20 der Kontaktbrücke 4 zur Anlage kommen.

Alternativ, zu den dargestellten Ausführungsbeispielen, ist es auch möglich, den zweiten Kontaktstift 16 der Kontaktbrücke 4 in die Kontaktbuchse des zweiten Hauptkontaktes 3 in der zweiten Stellung einzustecken. Dies wäre auf einfache Weise, lediglich durch eine Verlängerung des Stegbereiches 20, möglich.

Bezüglich der Hilfskontaktaufnahme 13, ist weiterhin vorzugsweise vorgesehen, die Hilfskontaktaufnahme mit einer geschlossenen Mantelfläche 21 auszugestalten, um in der ersten und zweiten Stellung der Kontaktbrücke 4 eine Einwirkung auf die ersten und zweiten Kontaktstifte 14, 16 von außen zu vermeiden.

## Patentansprüche

1. Fahrzeugseitige Dose (1) eines Ladesteckverbinders, insbesondere für Flurförderfahrzeuge, mit einem ersten Hauptkontakt (2) und einem zweiten Hauptkontakt (3), die mit einem Ladestecker verbindbar sind, sowie einem Hilfskontakt (5), der im Betriebszustand des Fahrzeuges, wenn der Ladestecker abgenommen ist, über eine Kontaktbrücke (4) mit einem der Hauptkontakte (2, 3) elektrisch verbunden ist, **dadurch gekennzeichnet, dass** die Kontaktbrücke (4) mit einem ersten Ende (15) unverlierbar mit dem Hilfskontakt (5) verbunden ist, und aus einer ersten Stellung, in der der eine Hauptkontakt (2, 3) zum Aufstecken des Ladesteckers freigegeben ist, in eine zweite Stellung überführbar ist, in der die Kontaktbrücke (4) den Hilfskontakt (5) mit dem einen Hauptkontakt (2, 3) verbindet.

2. Fahrzeugseitige Dose (1) nach Anspruch 1, **dadurch gekennzeichnet, dass** das erste Ende (15) der Kontaktbrücke (4) in einen, mit dem Hilfskontakt (5) verbundenen, ersten Kontaktstift (14) übergeht, und/ oder ein zweites Ende (17) der Kontaktbrücke (4), zum Kontaktieren des einen Hauptkontaktes (2, 3) in der zweiten Stellung, in einen zweiten Kontaktstift (16) übergeht.

3. Fahrzeugseitige Dose (1) nach Anspruch 2, **dadurch gekennzeichnet, dass** der erste und der zweite Hauptkontakt (2, 3) als zwei Kontaktbuchsen ausgestaltet sind, die bezüglich ihrer Längsachse (6, 7) im Wesentlichen parallel nebeneinander und/ oder parallel zu einer Längsachse (23, 25) des ersten Kontaktstiftes (14) und/ oder des zweiten Kontaktstiftes (16) angeordnet sind.

4. Fahrzeugseitige Dose (1) nach einem der Ansprüche 2 und 3, **dadurch gekennzeichnet, dass** die Kontaktbrücke (4) zum Umschalten von der ersten in die zweite Stellung axial, entlang der Längsachse (23) des ersten Kontaktstiftes (14), in eine erste Zwischenstellung, verschiebbar sowie in eine zweite Zwischenstellung verdrehbar ist, von welcher zweiten Zwischenstellung der zweite Kontaktstift (16) in die zweite Stellung verschiebbar ist.

5. Fahrzeugseitige Dose (1) nach einem der vorherigen Ansprüche, **dadurch gekennzeichnet, dass** der Hilfskontakt (5) mittels eines Federelementes (18) in der zweiten Stellung und in der ersten Stellung lagegesichert ist.

6. Fahrzeugseitige Dose (1) nach einem der Ansprüche 2 bis 5, **dadurch gekennzeichnet, dass** die Kontaktbrücke (4) zwischen dem ersten und dem zweiten Ende (15, 17) einen Stegbereich (20) aufweist, der quer zu der Längsachse (23, 25) des ersten und/ oder zweiten Kontaktstiftes (14, 16) ausgerichtet ist.

7. Fahrzeugseitige Dose (1) nach einem der Ansprüche 2 bis 6, **dadurch gekennzeichnet, dass** die Kontaktbrücke (4) um die Längsachse (23) des ersten Kontaktstiftes (14) verdrehbar gelagert ist und zum Umschalten der Kontaktbrücke (4) von der ersten in die zweite Stellung die Kontaktbrücke (4) um die Längsachse (23) des ersten Kontaktstiftes (14) gedreht wird.

## Claims

1. A vehicle-side socket (1) of a charging connector, in particular for industrial vehicles, comprising a first main contact (2) and a second main contact (3), which are adapted to be connected to a charging connector, as well as an auxiliary contact (5) which, in the operating condition of the vehicle, with the charging connector removed, is electrically connected to one of the main contacts (2, 3) via a contact bridge (4), **characterized in that** the contact bridge (4) has a first end (15) captively secured to the auxiliary contact (5) and is adapted to be transferred from a first position, at which said one main contact (2, 3) is free for attaching the charging connector thereto, to a second position, at which the contact bridge (4) connects the auxiliary contact (5) to said main contact (2, 3).

2. A vehicle-side socket (1) according to claim 1, **characterized in that** the first end (15) of the contact bridge (4) merges with a first contact pin (14) connected to the auxiliary contact (5), and/or that, for contacting said one of the main contacts (2, 3) at the second position, a second end (17) of the contact bridge (4) merges with a second contact pin (16).

3. A vehicle-side socket (1) according to claim 2, **characterized in that** the first and second main contacts (2, 3) are configured as two contact bushings arranged, with respect to their longitudinal axes (6, 7), substantially in parallel side by side and/or parallel to a longitudinal axis (23, 25) of the first contact pin (14) and/or of the second contact pin (16).

4. A vehicle-side socket (1) according to one of the claims 2 and 3, **characterized in that**, for switching from the first position to the second position, the contact bridge (4) is adapted to be displaced axially along the longitudinal axis (23) of the first contact pin (14) to a first intermediate position and to be rotated to a second intermediate position, the second contact pin (16) being displaceable from said second intermediate position to the second position.

5. A vehicle-side socket (1) according to one of the preceding claims, **characterized in that** the auxiliary contact (5) is secured in position by means of a spring element (18) at the second position and at the first position.

6. A vehicle-side socket (1) according to one of the claims 2 to 5, **characterized in that** the contact bridge (4) includes a flange portion (20) between the first and second ends (15, 17), said flange portion (20) being oriented transversely to the longitudinal axis (23, 25) of the first and/or second contact pin (14, 16).

7. A vehicle-side socket (1) according to one of the claims 2 to 6, **characterized in that** the contact bridge (4) is supported such that it is rotatable about the longitudinal axis (23) of the first contact pin (14), and that, for switching the contact bridge (4) from the first position to the second position, said contact bridge (4) is rotated about the longitudinal axis (23) of the first contact pin (14).

## Revendications

1. Prise (1), située côté véhicule, d'un connecteur de charge, notamment pour des véhicules ou chariots de manutention, comprenant un premier contact principal (2) et un deuxième contact principal (3), qui peuvent être reliés à une fiche de connecteur de charge, ainsi qu'un contact auxiliaire (5), qui dans l'état de service du véhicule, lorsque la fiche de connecteur de charge est débranchée, est relié électriquement à l'un des contacts principaux (2, 3) par l'intermédiaire d'un pontage de contact (4), **caractérisée en ce que** le pontage de contact (4) est relié de manière imperdable, par une première extrémité (15), au contact auxiliaire (5), et peut être transféré d'une première position, dans laquelle ledit un contact principal (2, 3) est dégagé pour y engager la fiche de connecteur de charge, dans une deuxième position dans laquelle le pontage de contact (4) relie le contact auxiliaire (5) au dit un contact principal (2, 3).

2. Prise (1), située côté véhicule, selon la revendication 1, **caractérisée en ce que** la première extrémité (15) du pontage de contact (4) se raccorde à une première broche de contact (14) reliée au contact auxiliaire (5), et/ou la deuxième extrémité (17) du pontage de contact (4) se raccorde à une deuxième broche de contact (16), pour contacter ledit un contact principal (2, 3) dans ladite deuxième position.

3. Prise (1), située côté véhicule, selon la revendication 2, **caractérisée en ce que** le premier et le deuxième contact principal (2, 3) sont réalisés sous la forme de deux douilles de contact, qui, relativement à leur axe longitudinal (6, 7), sont agencées sensiblement de manière voisine et parallèlement l'une à l'autre, et/ou parallèlement à un axe longitudinal (23, 25) de la première broche de contact (14) et/ou de la deuxième broche de contact (16).

4. Prise (1), située côté véhicule, selon l'une des revendications 2 et 3, **caractérisée en ce que** le pontage de contact (4), pour la commutation de la première à la deuxième position, peut coulisser axialement le long de l'axe longitudinal (23) de la première broche de contact (14) dans une première position intermédiaire, puis peut être tourné dans une deuxième position intermédiaire, deuxième position intermédiaire à partir de laquelle il est possible de faire coulisser la deuxième broche de contact (16) à la deuxième position.

5. Prise (1), située côté véhicule, selon l'une des revendications précédentes, **caractérisée en ce que** le contact auxiliaire (5) est immobilisé en position au moyen d'un élément de ressort (18), dans ladite deuxième position et dans ladite première position.

6. Prise (1), située côté véhicule, selon l'une des revendications 2 à 5, **caractérisée en ce que** le pontage de contact (4) présente, entre la première et la deuxième extrémité (15, 17), une zone en forme de branche (20), qui est orientée transversalement à l'axe longitudinal (23, 25) de la première et/ou de la deuxième broche de contact (14, 16).

7. Prise (1), située côté véhicule, selon l'une des revendications 2 à 6, **caractérisée en ce que** le pontage de contact (4) est monté rotatif autour de l'axe longitudinal (23) de la première broche de contact (14), et le pontage de contact (4) est tourné autour de l'axe longitudinal (23) de la première broche de contact (14), pour la commutation du pontage de contact (4) de la première à la deuxième position.
